# EUROPÄISCHE PATENTSCHRIFT

(11) **EP 4 452 621 B1**
(45) Veröffentlichungstag und Bekanntmachung des Hinweises auf die Patenterteilung: **22.07.2026**
(21) Anmeldenummer: 22835296.9
(22) Anmeldetag: 09.12.2022
(51) Int. Cl.: B31F 1/28, G01F 11/22, B05C 1/10, B05C 1/08

(54) **FLÜSSIGKEITSEINRICHTUNG**
LIQUID DEVICE
DISPOSITIF À LIQUIDE

(30) Priorität: 21.12.2021 DE 102021214832
(43) Veröffentlichungstag der Anmeldung: 30.10.2024
(73) Patentinhaber: BHS Corrugated Maschinen- und Anlagenbau GmbH, 92729 Weiherhammer (DE)
(72) Erfinder: HECKY, Thomas, 92637 Weiden (DE)
(74) Vertreter: Rau, Schneck & Hübner Patentanwälte Rechtsanwälte PartGmbB
(86) Internationale Anmeldenummer: PCT/EP2022/085144
(87) Internationale Veröffentlichungsnummer: WO 2023/117485

(56) Entgegenhaltungen:
- EP-A1- 0 598 932
- EP-A1- 3 608 233
- EP-A1- 3 702 137
- WO-A1-2012/035473
- DE-A1- 1 561 494
- DE-A1- 19 748 892
- DE-C1- 4 411 545

## Beschreibung

Die Erfindung betrifft eine Flüssigkeitseinrichtung. Ferner richtet sich die Erfindung auf eine Flüssigkeitsvorrichtung mit mindestens einer derartigen Flüssigkeitseinrichtung und auf ein System mit mindestens einer solchen Flüssigkeitsvorrichtung.

Bekanntlich kommt es immer wieder vor, dass Dosiereinrichtungen, Auftragseinrichtungen, Überführungseinrichtungen oder dergleichen in ihrer Gesamtheit oder Bestandteile derselben ausgetauscht werden müssen, um entsprechende, wie neue bzw. geänderte, Anforderungen zu erfüllen. Häufig ist damit verbunden, dass eine Produktion unterbrochen werden muss.

Dosiereinrichtungen sind branchenübergreifend bekannt, so betrifft beispielsweise die EP 3 608 233 A1 eine Dosierwalze zum Befüllen eines Zielbehälters mit einer zu dosierenden Teilmenge eines pulvrigen Produkts. Die Dosierwalze umfasst einen Walzenmantel, ein Filterelement, eine Filterleiste, eine Dichtung und einen Spannkern. Der Walzenmantel ist mit mindestens einer den Walzenmantel von seiner Außenseite zu seiner Innenseite vollständig durchdringenden Dosieröffnung versehen, wobei die Dosieröffnung innenseitig mittels des Filterelements begrenzt ist.

Ebenso sind Füllmaschinen aus verschiedensten Dokumenten, wie bspw. der DE 44 11 545 C1 bekannt. Diese beschreibt eine Vorrichtung zum Dosieren von flockig-zerbrechlichem Füllgut und beschäftigt sich mit der Aufgabe für ein leicht zerbrechliches Füllgut die Vorrichtung so auszugestalten, dass damit bei einer hohen Dosierleistung eine bruchfreie bzw. weitestgehend bruchfrei Abdosierung gewährleistet ist.

Des Weiteren beschreibt die DE 15 61 494 A1 eine Klebstoffauftragvorrichtung von Wellpappemaschinen.

Der Erfindung liegt die Aufgabe zugrunde, eine Flüssigkeitseinrichtung bereitzustellen, die an unterschiedliche (Produktions-)Erfordernisse, Anforderungen bzw. Aufträge einfach und funktionssicher anpassbar und so besonders vielseitig einsetzbar ist. Die Flüssigkeitseinrichtung soll außerdem eine besonders effiziente und nachhaltige Produktion erlauben. Eine entsprechende Flüssigkeitsvorrichtung und ein entsprechendes System sollen ferner geliefert werden.

Diese Aufgabe wird erfindungsgemäß durch die in den Hauptansprüchen 1, 12 und 14 angegebenen Merkmale gelöst. Der Kern der Erfindung liegt in dem Öffnungskörper und Zwischenkörper, der imstande ist, in mindestens eine Öffnung der Öffnungen mindestens teilweise einzugreifen und so deren, insbesondere freies, jeweiliges Flüssigkeitsaufnahme-Volumen bzw. Flüssigkeitsabgabe-Volumen entsprechend zu ändern. Bevorzugt ist so eine Oberflächenstruktur der Flüssigkeitseinrichtung zumindest bereichsweise, insbesondere reversibel, änderbar.

Der Öffnungskörper und Zwischenkörper sind imstande, entsprechend miteinander wechselzuwirken. Sie sind bevorzugt bei dem Eingreifen des Zwischenkörpers in den Öffnungskörper bzw. dafür imstande, zumindest bereichsweise eine Relativbewegung zueinander auszuführen. Es ist zweckmäßig, wenn der Öffnungskörper der Relativbewegung und/oder dem Eingreifen des Zwischenkörpers in den Öffnungskörper zumindest bereichsweise einen mechanischen Widerstand entgegensetzt. Beispielsweise ist der Zwischenkörper und/oder der Öffnungskörper entsprechend beaufschlagbar, wie zumindest teilweise verlagerbar, einer Kraft, wie Zugkraft oder Druckkraft, aussetzbar oder dergleichen. Der Zwischenkörper ist beispielsweise derart beaufschlagbar, dass er sein Volumen und/oder seine Form zumindest bereichsweise verändert. Er ist vorzugsweise flexibel, nachgiebig, aufblasbar oder dergleichen.

Es ist zweckmäßig, wenn das Flüssigkeitsaufnahme-Volumen der mindestens einen Öffnung gezielt, beispielsweise schrittweise oder stufenlos, veränderbar ist. Es ist von Vorteil, wenn die mindestens eine Öffnung auf einer Seite durch den Zwischenkörper, insbesondere stets, bevorzugt dicht, verschlossen und auf einer gegenüberliegenden, dem Zwischenkörper abgewandten Seite, bevorzugt stets, insbesondere unter Bildung eines Flüssigkeitseinlasses bzw. Flüssigkeitsauslasses, offen ist. Der Zwischenkörper bildet vorzugsweise eine Flüssigkeitsbarriere. Er ist günstigerweise imstande, die mindestens eine Öffnung zumindest teilweise bzw. bereichsweise, beispielsweise auch vollständig, auszufüllen. Der Zwischenkörper liegt dann bevorzugt in der jeweiligen Öffnung bzw. benachbart zu dieser dicht an dem Öffnungskörper an. Es ist zweckmäßig, wenn der Zwischenkörper auch imstande ist, außer Eingriff mit dem Öffnungskörper zu stehen und so das Flüssigkeitsaufnahme-Volumen unbeeinflusst lässt.

Es ist von Vorteil, wenn Flüssigkeit imstande ist, von der dem Zwischenkörper abgewandten Seite in den Öffnungskörper zu gelangen, sofern der Zwischenkörper dies erlaubt. Der Öffnungskörper ist dann entsprechend imstande, Flüssigkeit in seine Öffnungen über deren Flüssigkeitseinlässe aufzunehmen. Die Flüssigkeit ist von dort auch wieder entsprechend umgekehrt abgebbar, beispielsweise an ein Medium, wie eine Bahn oder einen Bogen, und/oder einen Gegenkörper, wie eine Walze. Die Flüssigkeitseinlässe bilden dann auch Flüssigkeitsauslässe.

Der Zwischenkörper ist zum Beispiel aus einem Elastomer- oder Gummimaterial gebildet. Er kann einteilig sein. Alternativ ist er aus mehreren Zwischenelementen gebildet, die beispielsweise (im Wesentlichen) konstruktiv identisch sind.

Der Grundkörper ist vorzugsweise starr bzw. unnachgiebig. Er ist beispielsweise einteilig ausgeführt. Alternativ ist er aus mehreren Grundelementen gebildet, die beispielsweise (im Wesentlichen) konstruktiv identisch sind.

Der Zwischenkörper ist beispielsweise zumindest bereichsweise direkt über dem Grundkörper oder beabstandet über diesem angeordnet. Zum Beispiel ist der Zwischenkörper entsprechend oberhalb des Grundkörpers angeordnet. Beispielsweise umgibt bzw. umläuft der Zwischenkörper entsprechend den Grundkörper, wie zumindest bereichsweise, bevorzugt vollständig.

Der Öffnungskörper ist beispielsweise einteilig ausgeführt. Alternativ ist er aus mehreren Öffnungselementen gebildet, die beispielsweise (im Wesentlichen) konstruktiv identisch sind. Es ist zweckmäßig, wenn der Öffnungskörper starr bzw. unnachgiebig ist.

Günstigerweise sind die Öffnungen identisch ausgebildet. Beispielsweise sind sie zumindest bereichsweise regelmäßig, wie in Reihen und/oder Spalten, oder unregelmäßig angeordnet. Sie sind bevorzugt jeweils umfangsseitig räumlich begrenzt bzw. beabstandet zueinander angeordnet. Günstigerweise haben die Öffnungen jeweils einen (im Wesentlichen) konstanten Querschnitt. Es ist zweckmäßig, wenn sich die Öffnungen jeweils gerade erstrecken. Die Öffnungen können endseitig abgerundet bzw. abgefast sein oder dort einen anderen Querschnitt haben. Es ist zweckmäßig, wenn jede Öffnung eine Höhe bzw. Tiefe aufweist, die zwischen 1 mm und 50 mm, bevorzugt zwischen 5 mm und 40 mm, liegt. Bevorzugt hat jede Öffnung eine Öffnungsgröße bzw., beispielsweise minimale oder maximale, Querabmessung, die zwischen 0,1 mm und 10 mm, bevorzugt zwischen 0,5 mm und 5 mm, liegt.

Der Öffnungskörper ist beispielsweise zumindest bereichsweise direkt über dem Zwischenkörper angeordnet. Zum Beispiel ist der Öffnungskörper entsprechend oberhalb des Zwischenkörpers angeordnet. Beispielsweise umgibt bzw. umläuft der Öffnungskörper entsprechend den Zwischenkörper, wie zumindest bereichsweise, bevorzugt vollständig. Der Öffnungskörper bildet bevorzugt eine freie Arbeitsfläche aus, die dem Zwischenkörper abgewandt ist.

Die Flüssigkeitseinrichtung hat beispielsweise eine Mittelebene, Mittelachse oder dergleichen, die bevorzugt senkrecht oder schräg zu dem Medium und/oder dessen Förderrichtung, falls gefördert, Längsrichtung oder dergleichen orientiert ist.

Die mindestens eine Flüssigkeitseinrichtung und Beaufschlagungseinrichtung stehen beispielsweise zumindest zeitweise in Wirkverbindung, wie Fluidverbindung, Strömungsverbindung oder mechanischer Verbindung, miteinander. Die mindestens eine Beaufschlagungseinrichtung ist im Betrieb insbesondere imstande, eine Druckkraft und/oder Zugkraft auf den Zwischenkörper und/oder Öffnungskörper auszuüben bzw. diese/n zumindest bereichsweise relativ zueinander zu verlagern.

Die Flüssigkeitsvorrichtung ist beispielsweise als Vorrichtung zum Herstellen einer einseitig kaschierten Wellpappebahn, Leimwerk, Druckvorrichtung und/oder Vorbeschichtungsvorrichtung ausgeführt.

Weitere vorteilhafte Ausgestaltungen der Erfindung sind in den Unteransprüchen angegeben.

Gemäß dem Unteranspruch 2 ist die Flüssigkeitseinrichtung als Flüssigkeits-Dosiereinrichtung, Flüssigkeits-Abquetscheinrichtung, Flüssigkeits-Auftragseinrichtung, Flüssigkeits-Überführungseinrichtung, Leimeinrichtung, Vorbeschichtungseinrichtung und/oder Farbeneinrichtung ausgeführt. Sie bzw. deren Arbeitsfläche ist beispielsweise imstande, eine Flüssigkeit zu dosieren, abzuquetschen, aufzutragen und/oder zu überführen. Die Flüssigkeit ist beispielsweise Leim, eine Vorbeschichtung (Primer) oder Farbe, insbesondere Druckfarbe.

Die Öffnungen gemäß dem Unteranspruch 3 bilden bevorzugt eine Verbindung zwischen dem Zwischenkörper und der Umgebung aus.

Gemäß dem Unteranspruch 4 sind die Öffnungen in einem Großteil des Öffnungskörpers, insbesondere in einem Großteil eines wirksamen Flüssigkeitsbereichs bzw. Oberflächenbereichs desselben, angeordnet. Eine solche Flüssigkeitseinrichtung ist äußerst variabel einsetzbar.

Bei der Flüssigkeitseinrichtung gemäß dem Unteranspruch 5 sind die Öffnungen bevorzugt durch Trennelemente, insbesondere dünne, Stege, Wände oder dergleichen, seitlich begrenzt bzw. voneinander abgegrenzt, was bevorzugt die Arbeitsfläche des Öffnungskörpers ausbildet. Die Arbeits- bzw. Oberfläche des Öffnungskörpers ist günstigerweise gitter- oder siebartig.

Die Ausgestaltung gemäß dem Unteranspruch 6 erlaubt eine besonders vorteilhafte Orientierung der Öffnungen zueinander. Jede Öffnung ist vorzugsweise als Vieleck, wie Rechteck, ausgeführt. Insbesondere ist jede Öffnung als regelmäßiges Vieleck ausgebildet. Sie hat bevorzugt einen entsprechenden Querschnitt. Die Öffnungen sind beispielsweise derart orientiert, dass eine Mittelebene, Mittelachse oder Diagonale derselben senkrecht, schräg oder parallel zu einer Mittelebene oder Mittelachse der Flüssigkeitseinrichtung und/oder Längsrichtung und/oder Förderrichtung, falls gefördert, des Mediums verläuft. Alternativ sind die Öffnungen in der Draufsicht bzw. im Querschnitt zum Beispiel jeweils kreisförmig, oval oder dergleichen. Kombinationen von Formen sind möglich.

Die Ausgestaltung gemäß dem Unteranspruch 7 erlaubt eine besonders große Änderung der in dem Öffnungskörper aufnehmbaren und bevorzugt auch abgebbaren Flüssigkeit. Je mehr der Zwischenkörper das Flüssigkeitsaufnahme-Volumen verkleinert, desto weniger Flüssigkeit ist aufnehmbar und auch entsprechend wieder abgebbar.

Gemäß dem Unteranspruch 8 ist der Zwischenkörper und/oder Öffnungskörper beispielsweise in nur mindestens einem Teilbereich, wie, beispielsweise zentralen oder äußeren, Breitenbereich, beaufschlagbar, was ein gezieltes Beaufschlagen erlaubt. Eine besonders funktionssichere bzw. effiziente Produktion ist so möglich. Bevorzugt ist so die wirksame Arbeitsfläche einstellbar. Beispielsweise ist die Flüssigkeitseinrichtung aufgrund dessen imstande, örtlich unterschiedliche Flüssigkeitsmengen aufzunehmen bzw. aufzutragen. Beispielsweise ist so auch die Feuchtigkeit in dem Medium ausgleichbar bzw. beeinflussbar, das mit der Flüssigkeitseinrichtung in Wirkverbindung bzw. Wechselwirkung steht bzw. Flüssigkeit von dieser empfängt. Alternativ ist zum Beispiel ein unterschiedlicher Farbauftrag möglich.

Die Ausgestaltung gemäß dem Unteranspruch 9 erlaubt eine besonders effiziente Produktion. Die Walze ist beispielsweise als Vollwalze oder Hohlwalze ausgeführt. Sie ist günstigerweise drehbar bzw. drehantreibbar gelagert. Der Grundkörper, Zwischenkörper und Öffnungskörper haben bevorzugt eine gemeinsame Längsmittelachse. Diese erstreckt sich vorzugsweise im Einsatz horizontal. Es ist zweckmäßig, wenn der Öffnungskörper zu der Längsmittelachse einen fixen, insbesondere unveränderlichen, Abstand aufweist.

Die Flüssigkeitseinrichtung gemäß dem Unteranspruch 10 ist besonders funktionssicher. Es ist zweckmäßig, wenn der mindestens eine Beaufschlagungskanal mindestens einen Auslass aufweist, der benachbart zu dem Zwischenkörper angeordnet bzw. diesem zugewandt ist. Er mündet günstigerweise zu dem Zwischenkörper hin aus. Bevorzugt sind mehrere Beaufschlagungskanäle vorhanden.

Der Grundkörper gemäß dem Unteranspruch 11 ist beispielsweise rechteckförmig ausgeführt. Es ist zweckmäßig, wenn dieser in seiner Höhe, insbesondere gezielt, verlagerbar ist. Günstigerweise ist der Zwischenkörper, beispielsweise direkt, über dem Grundkörper angeordnet. Der Öffnungskörper ist beispielsweise ortsfest angeordnet. Der Zwischenkörper ist insbesondere imstande, in den Öffnungskörper, bevorzugt von unten, einzugreifen.

Gemäß dem Unteranspruch 13 ist die mindestens eine Beaufschlagungseinrichtung hydraulischer, pneumatischer und/oder mechanischer Art. Sie umfasst beispielsweise eine Pumpe, einen Verdichter, einen Antrieb oder dergleichen. Beispielsweise weist die mindestens eine Beaufschlagungseinrichtung auch eine Kolben-Zylinder-Einheit auf.

Nachfolgend wird unter Bezugnahme auf die beigefügte Zeichnung eine bevorzugte Ausführungsform der Erfindung beispielhaft beschrieben. Dabei zeigen:
- Fig. 1: eine Teilansicht eines erfindungsgemäßen Systems,
- Fig. 2: eine erfindungsgemäße Vorrichtung zum Herstellen einer einseitig kaschierten Wellpappebahn des in Fig. 1 gezeigten Systems,
- Fig. 3: ein erfindungsgemäßes Leimwerk des in Fig. 1 veranschaulichten Systems,
- Fig. 4: eine erfindungsgemäße Flüssigkeitsvorrichtung, die beispielsweise in der Vorrichtung zum Herstellen einer einseitig kaschierten Wellpappebahn gemäß Fig. 2 und/oder dem Leimwerk gemäß Fig. 3 einsetzbar ist,
- Fig. 5: einen Querschnitt durch eine Flüssigkeitseinrichtung der Flüssigkeitsvorrichtung gemäß Fig. 4,
- Fig. 6: einen endseitigen Ausschnitt der in Fig. 4 bzw. Fig. 5 veranschaulichten Flüssigkeitseinrichtung der Flüssigkeitsvorrichtung,
- Fig. 7: einen äußeren Randbereich der dargestellten Flüssigkeitseinrichtung, und
- Fig. 8: das in Fig. 7 gekennzeichnete Detail in vergrößertem Maßstab

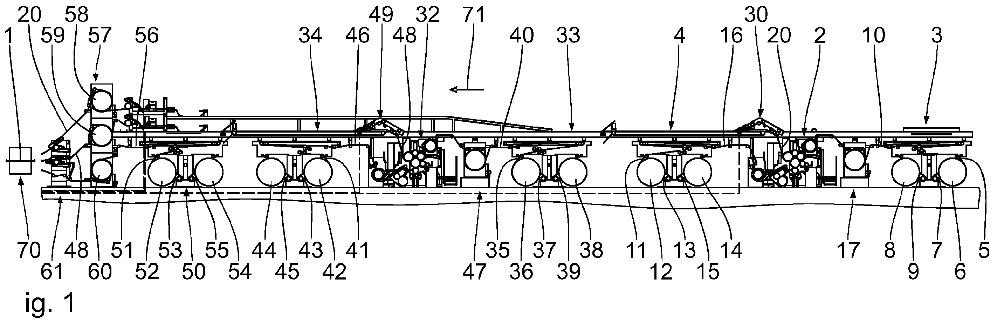

Ein in Fig. 1 teilweise dargestelltes System umfasst eine Wellpappeanlage, die imstande ist, eine endlose Wellpappebahn 1 herzustellen, die beidseitig bzw. zweiseitig kaschiert ist.

Die Wellpappeanlage umfasst eine erste Vorrichtung 2 zum Herstellen einer einseitig kaschierten ersten Wellpappebahn.

Der ersten Vorrichtung 2 zum Herstellen einer einseitig kaschierten ersten Wellpappebahn sind eine erste Deckbahn-Spleißvorrichtung 3 und eine erste Materialbahn-Spleißvorrichtung 4 vorgeordnet.

Die erste Deckbahn-Spleißvorrichtung 3 umfasst zum Abrollen einer endlichen ersten Deckbahn 5 von einer ersten Deckbahnrolle 6 eine erste Abrolleinheit 7 und zum Abrollen einer endlichen zweiten Deckbahn von einer zweiten Deckbahnrolle 8 eine zweite Abrolleinheit 9. Die endliche erste Deckbahn 5 und die endliche zweite Deckbahn werden zum Bereitstellen einer endlosen ersten Deckbahn 10 in der ersten Deckbahn-Spleißvorrichtung 3 miteinander verbunden.

Die erste Materialbahn-Spleißvorrichtung 4 ist entsprechend der ersten Deckbahn-Spleißvorrichtung 3 ausgebildet. Diese umfasst zum Abrollen einer endlichen ersten Materialbahn 11 von einer ersten Materialbahnrolle 12 eine dritte Abrolleinheit 13 und zum Abrollen einer endlichen zweiten Materialbahn von einer zweiten Materialbahnrolle 14 eine vierte Abrolleinheit 15. Die endliche erste Materialbahn 11 und die endliche zweite Materialbahn werden zum Bereitstellen einer endlosen ersten Materialbahn 16 in der ersten Materialbahn-Spleißvorrichtung 4 miteinander verbunden.

Die endlose erste Deckbahn 10 wird über eine erste Heizvorrichtung 17 der ersten Vorrichtung 2 zum Herstellen einer einseitig kaschierten ersten Wellpappebahn zugeführt. Die endlose erste Materialbahn 16 wird ebenfalls der ersten Vorrichtung 2 zum Herstellen einer einseitig kaschierten ersten Wellpappebahn zugeführt.

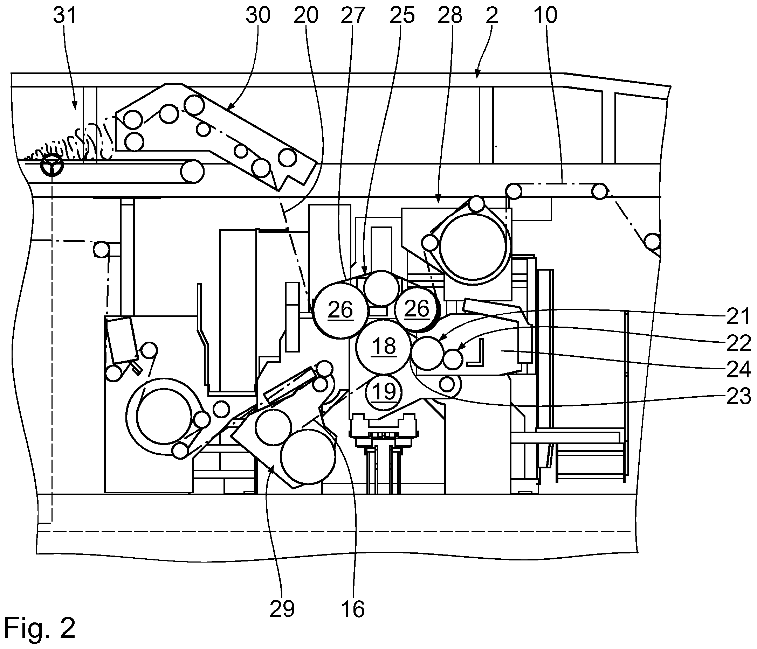

Die erste Vorrichtung 2 zum Herstellen einer einseitig kaschierten ersten Wellpappebahn umfasst zum Erzeugen einer eine Wellung aufweisenden endlosen ersten Wellbahn aus der endlosen ersten Materialbahn 16 eine drehbar gelagerte erste Riffelwalze 18 und eine drehbar gelagerte zweite Riffelwalze 19 (siehe auch Fig. 2). Die Riffelwalzen 18, 19 bilden zum Durchführen und Riffeln der endlosen ersten Materialbahn 16 einen ersten Walzenspalt aus.

Zum Verbinden der endlosen ersten Deckbahn 10 mit der endlosen ersten Wellbahn 16 zu einer einseitig kaschierten ersten Wellpappebahn 20 weist die erste Vorrichtung 2 zum Herstellen einer einseitig kaschierten ersten Wellpappebahn eine erste Leim-Auftragseinrichtung 21 und eine dieser zugeordnete erste Leim-Dosiereinrichtung 22 auf. Zum Durchführen und Beleimen der endlosen ersten Wellbahn 16 bildet die erste Leim-Auftragseinrichtung 21 mit der ersten Riffelwalze 18 einen ersten Leimspalt 23 aus.

Sich in einem ersten Leimbehälter 24 befindender Leim wird über die erste Leim-Auftragseinrichtung 21 auf Spitzen einer Wellung der endlosen ersten Wellbahn 16 aufgetragen. Die ersten Leim-Auftragseinrichtung 21 ist zwischen der ersten Riffelwalze 18 und der ersten Leim-Dosiereinrichtung 22 angeordnet. Die erste Leim-Dosiereinrichtung 22 dient zum Ausbilden einer gleichmäßigen Leimschicht auf der ersten Leim-Auftragseinrichtung 21.

Die endlose erste Deckbahn 10 wird anschließend mit der mit Leim aus dem ersten Leimbehälter 24 versehenen endlosen ersten Wellbahn 16 in der ersten Vorrichtung 2 zum Herstellen einer einseitig kaschierten ersten Wellpappebahn zusammengefügt.

Zum Anpressen der endlosen ersten Deckbahn 10 gegen die mit Leim versehene endlose erste Wellbahn 16, die wiederum bereichsweise an der ersten Riffelwalze 18 anliegt, hat die erste Vorrichtung 2 zum Herstellen einer einseitig kaschierten ersten Wellpappebahn ein erstes Anpressmodul 25. Das erste Anpressmodul 25 ist günstigerweise als Anpressbandmodul ausgeführt. Es ist oberhalb der ersten Riffelwalze 18 angeordnet. Das erste Anpressmodul 25 hat zwei erste Umlenkwalzen 26 und ein erstes Anpressband 27, das um die beiden ersten Umlenkwalzen 26 geführt ist.

Die erste Riffelwalze 18 greift in einem zwischen den beiden ersten Umlenkwalzen 26 vorliegenden Raum bereichsweise von unten ein, wodurch das erste Anpressband 27 durch die erste Riffelwalze 18 umgelenkt wird. Das erste Anpressband 27 drückt gegen die endlose erste Deckbahn 10, die wiederum gegen die mit Leim versehene, an der ersten Riffelwalze 18 anliegende endlose erste Wellbahn 16 gepresst wird.

Die erste Vorrichtung 2 zum Herstellen einer einseitig kaschierten ersten Wellpappebahn umfasst eine erste Bahnspannungs-Beeinflussungseinrichtung 28, die dem ersten Anpressmodul 25 vorgeordnet und der endlosen ersten Deckbahn 10 zugeordnet ist.

Die erste Vorrichtung 2 zum Herstellen einer einseitig kaschierten ersten Wellpappebahn weist außerdem eine erste Riffelwalzen-Wechseleinrichtung 29 auf, die ein bislang inaktives Riffelwalzen-Paar bevorratet.

Zum weiteren Fördern der einseitig kaschierten ersten Wellpappebahn 20 wird diese über eine erste Hochtransporteinrichtung 30 einer Brücke 31 der Wellpappeanlage zugeführt.

Die Wellpappeanlage hat außerdem eine zweite Vorrichtung 32 zum Herstellen einer einseitig kaschierten zweiten Wellpappebahn.

Der zweiten Vorrichtung 32 zum Herstellen einer einseitig kaschierten zweiten Wellpappebahn sind eine zweite Deckbahn-Spleißvorrichtung 33 und eine zweite Materialbahn-Spleißvorrichtung 34 vorgeordnet.

Die zweite Deckbahn-Spleißvorrichtung 33 ist wie die erste Deckbahn-Spleißvorrichtung 3 ausgebildet. Diese umfasst zum Abrollen einer endlichen dritten Deckbahn 35 von einer dritten Deckbahnrolle 36 eine fünfte Abrolleinheit 37 und zum Abrollen einer endlichen vierten Deckbahn von einer vierten Deckbahnrolle 38 eine sechste Abrolleinheit 39. Die endliche dritte Deckbahn 35 und endliche vierte Deckbahn werden zum Bereitstellen einer endlosen zweiten Deckbahn 40 in der zweiten Deckbahn-Spleißvorrichtung 33 miteinander verbunden.

Die zweite Materialbahn-Spleißvorrichtung 34 ist wie die erste Materialbahn-Spleißvorrichtung 4 ausgebildet. Diese umfasst zum Abrollen einer endlichen dritten Materialbahn 41 von einer dritten Materialbahnrolle 42 eine siebte Abrolleinheit 43 und zum Abrollen einer endlichen vierten Materialbahn von einer vierten Materialbahnrolle 44 eine achte Abrolleinheit 45. Die endliche dritte Materialbahn 41 und endliche vierte Materialbahn werden zum Bereitstellen einer endlosen zweiten Materialbahn 46 in der zweiten Materialbahn-Spleißvorrichtung 34 miteinander verbunden.

Die endlose zweite Deckbahn 40 wird über eine zweite Heizvorrichtung 47 der zweiten Vorrichtung 32 zum Herstellen einer einseitig kaschierten zweiten Wellpappebahn zugeführt. Die endlose zweite Materialbahn 46 wird ebenfalls der zweiten Vorrichtung 32 zum Herstellen einer einseitig kaschierten zweiten Wellpappebahn zugeführt.

Die zweite Vorrichtung 32 zum Herstellen einer einseitig kaschierten zweiten Wellpappebahn ist entsprechend der ersten Vorrichtung 2 zum Herstellen einer einseitig kaschierten ersten Wellpappebahn ausgebildet. Auf die vorherige Beschreibung wird verwiesen. In der zweiten Vorrichtung 32 zum Herstellen einer einseitig kaschierten zweiten Wellpappebahn wird aus der endlosen zweiten Deckbahn 40 und der endlosen zweiten Materialbahn 46 eine einseitig kaschierte zweite Wellpappebahn 48 gebildet.

Zum weiteren Fördern der einseitig kaschierten zweiten Wellpappebahn 48 wird diese über eine zweite Hochtransporteinrichtung 49 der Brücke 31 zugeführt.

Die Wellpappeanlage umfasst außerdem eine Kaschierbahn-Spleißvorrichtung 50, die wie die übrigen Spleißvorrichtung 3, 4, 33, 34 ausgebildet ist. Die Kaschierbahn-Spleißvorrichtung 50 umfasst zum Abrollen einer endlichen ersten Kaschierbahn 51 von einer ersten Kaschierbahnrolle 52 eine neunte Abrolleinheit 53 und zum Abrollen einer endlichen zweiten Kaschierbahn von einer zweiten Kaschierbahnrolle 54 eine zehnte Abrolleinheit 55. Die endliche erste Kaschierbahn 51 und die endliche zweite Kaschierbahn werden zum Bereitstellen einer endlosen Kaschierbahn 56 in der Kaschierbahn-Spleißvorrichtung 50 miteinander verbunden.

Stromabwärts zu der ersten Vorrichtung 2 zum Herstellen einer einseitig kaschierten ersten Wellpappebahn, der Vorrichtung 32 zum Herstellen einer einseitig kaschierten zweiten Wellpappebahn und der Kaschierbahn-Spleißvorrichtung 50 ist eine Vorheizvorrichtung 57 angeordnet, die drei übereinander angeordnete Vorheizwalzen 58, 59, 60 umfasst. Der Vorheizvorrichtung 57 werden die einseitig kaschierten Wellpappebahnen 20, 48 und die endlose Kaschierbahn 56 zugeführt, die die jeweilige Vorheizwalze 58, 59 bzw. 60 umschlingen und so eine Vorheizung erfahren.

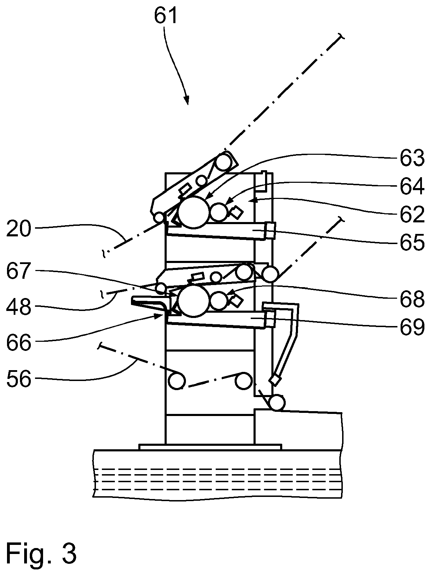

Stromabwärts zu der Vorheizvorrichtung 57 ist ein Leimwerk 61 angeordnet. Das Leimwerk 61 hat eine erste Beleimungsvorrichtung 62 mit einer ersten Beleimungs-Auftragseinrichtung 63 und einer ersten Leim-Abquetscheinrichtung 64, die der ersten Beleimungs-Auftragseinrichtung 63 zugeordnet ist, um eine gleichmäßige Leimschicht auf der ersten Beleimungs-Auftragseinrichtung 63 auszubilden bzw. überschüssigen Leim dort abzuquetschen (siehe auch Fig. 3). Die erste Beleimungs-Auftragseinrichtung 63 trägt Leim aus einer ersten Leimwanne 65 auf eine Wellung bzw. Riffelung der einseitig kaschierten ersten Wellpappebahn 20 auf.

Das Leimwerk 61 hat außerdem eine zweite Beleimungsvorrichtung 66, die wie die erste Beleimungsvorrichtung 62 ausgeführt und unter dieser angeordnet ist. Die zweite Beleimungsvorrichtung 66 umfasst eine zweite Beleimungs-Auftragseinrichtung 67 und eine zweite Leim-Abquetscheinrichtung 68, die der zweiten Beleimungs-Auftragseinrichtung 67 zugeordnet ist, um eine gleichmäßige Leimschicht auf der zweiten Beleimungs-Auftragseinrichtung 67 auszubilden bzw. überschüssigen Leim dort abzuquetschen. Die zweite Beleimungs-Auftragseinrichtung 67 trägt Leim aus einer zweiten Leimwanne 69 auf eine Wellung bzw. Riffelung der einseitig kaschierten zweiten Wellpappebahn 48 auf.

Unterhalb der zweiten Beleimungsvorrichtung 66 ist die endlose Kaschierbahn 56 durch das Leimwerk 61 geführt.

Stromabwärts zu dem Leimwerk 61 hat die Wellpappeanlage eine Heiz-Andrückvorrichtung 70 (nur schematisch in Fig. 1 dargestellt), die einen horizontal verlaufenden Heiztisch umfasst. Benachbart zu dem Heiztisch ist ein um Führungswalzen geführter, endloser Andrückgurt angeordnet. Zwischen dem Andrückgurt und dem Heiztisch ist ein Andrückspalt gebildet, durch den die beleimten, einseitig kaschierten Wellpappebahnen 20, 48 und die endlose Kaschierbahn 56 unter Bildung der endlosen, beidseitig kaschierten Wellpappebahn 1 geführt sind. Die endlose Wellpappebahn 1 ist insgesamt fünflagig.

Stromabwärts zu der Heiz-Andrückvorrichtung 70 hat die Wellpappeanlage eine Längsschneide-/Rillvorrichtung (nicht dargestellt), die imstande ist, die endlose Wellpappebahn 1 unter Bildung von Teil-Wellpappebahnen zu schneiden und zu rillen, um ein späteres Falten zu vereinfachen.

Stromabwärts zu der Längsschneide-/Rillvorrichtung hat die Wellpappeanlage eine Weiche (nicht dargestellt) zum Aufteilen der erzeugten Teil-Wellpappebahnen in unterschiedliche Ebenen.

Stromabwärts zu der Weiche weist die Wellpappeanlage eine Querschneidevorrichtung (nicht dargestellt) mit übereinander angeordneten Querschneideeinrichtungen auf, um die Teil-Wellpappebahnen unter Erzeugung von Wellpappebögen vollständig senkrecht zu einer Wellpappe-Transportrichtung 71 zu schneiden.

Stromabwärts zu jeder Querschneideeinrichtung ist ein Förderband (nicht dargestellt) angeordnet, um die Wellpappebögen zu einer jeweiligen Stapelablage (nicht dargestellt) zu führen.

In die Wellpappeanlage kann eine Druckvorrichtung (nicht dargestellt) integriert sein, um eine bedruckte endlose Wellpappebahn 1 bzw. Wellpappebögen zu erhalten. Alternativ ist die Druckvorrichtung der Wellpappeanlage vorgeordnet. Eine Bahn ist dort bedruckbar und wieder zu einer Bahnrolle aufwickelbar, die dann in der Wellpappeanlage, beispielsweise als Kaschierbahn, eingesetzt wird. Die Druckvorrichtung arbeitet mit mindestens einer Druckfarbe.

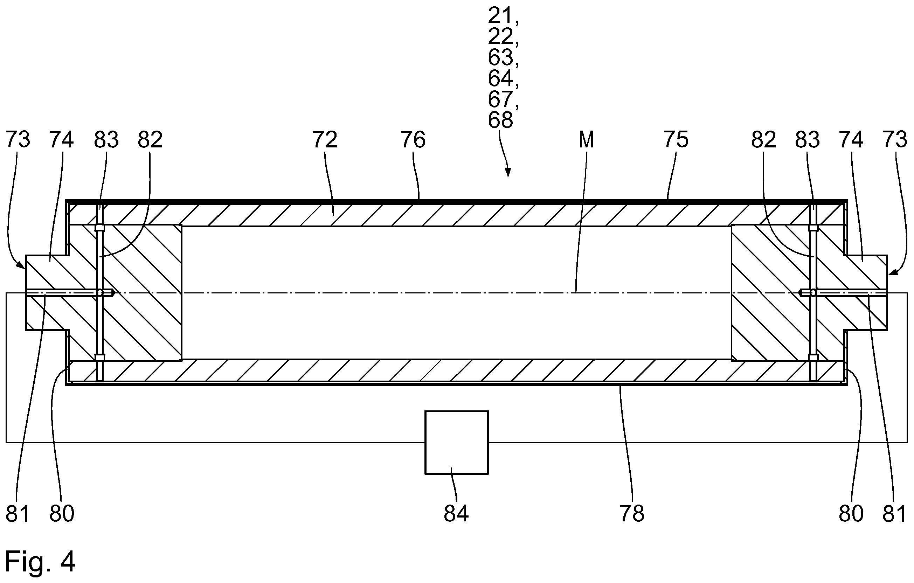

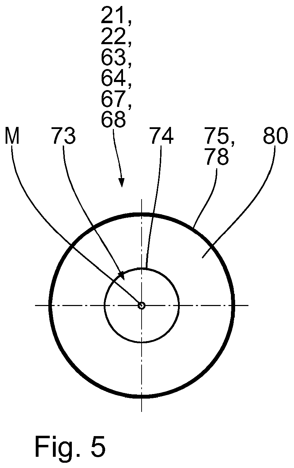

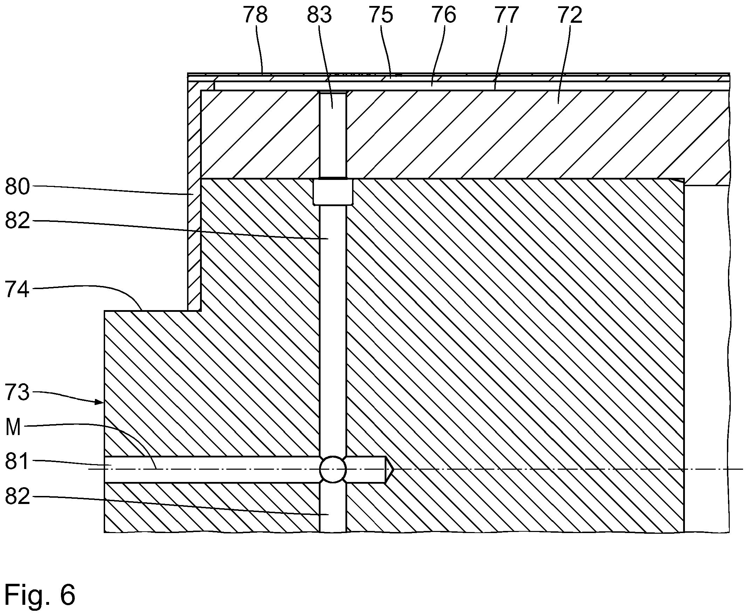

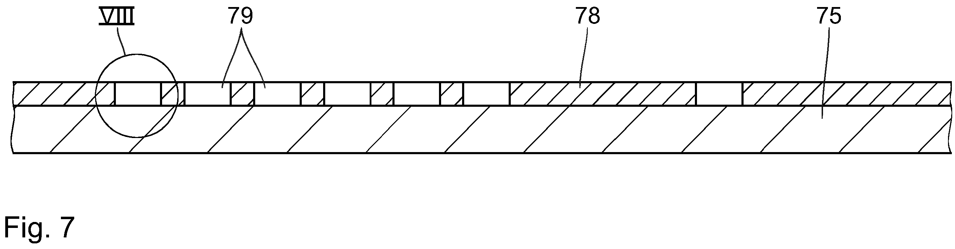

Nachfolgend wird unter Bezugnahme auf die Figuren 4 bis 8 der Aufbau der ersten Leim-Auftragseinrichtung 21 näher beschrieben.

Die erste Leim-Auftragseinrichtung 21 ist als Leim-Auftragswalze ausgeführt und umfasst einen hohlzylindrischen länglichen Grundkörper 72.

An dem Grundkörper 72 sind zwei Lagerkörper 73 angeordnet. Die Lagerkörper 73 sind bevorzugt identisch ausgeführt und in axialen Endbereichen des Grundkörpers 72 angeordnet. Die Lagerkörper 73 und der Grundkörper 72 stehen in drehfester Verbindung miteinander. Jeder Lagerkörper 73 trägt außen einen zylindrischen Lagerzapfen 74, der eine mit einer Längsmittelachse M zusammenfallende Rotationsachse der ersten Leim-Auftragswalze 21 ausbildet. Der Grundkörper 72 ist starr und hat eine axiale Breite, die mindestens so breit wie die endlose erste Materialbahn 16 bzw. endlose erste Wellbahn ist.

Die erste Leim-Auftragswalze 21 umfasst außerdem einen Zwischenkörper 75, der sich bevorzugt unter Bildung eines Ringspalts 76 benachbart zu einer äußeren Umfangsfläche 77 des Grundkörpers 72 erstreckt. Der Zwischenkörper 75 ist im Querschnitt ringförmig ausgeführt und erstreckt sich um die Längsmittelachse M. Er ist beispielsweise schlauchartig bzw. hohlzylindrisch und aus einem nachgiebigen bzw. flexiblen Material. Er erstreckt sich bevorzugt (im Wesentlichen) über die gesamte axiale Breite des Grundkörpers 72. Der Ringspalt 76 ist nach radial innen durch den Grundkörper 72 und nach radial außen durch den Zwischenkörper 75 begrenzt.

Ein gitterartiger Öffnungskörper 78 ist außenseitig in Bezug auf den Zwischenkörper 75 angeordnet und bildet so einen Außenkörper. Der Öffnungskörper 78 ist im Querschnitt ringförmig ausgebildet und steht bevorzugt mit dem Zwischenkörper 75 in direkter Verbindung. Er ist hohlzylindrisch und erstreckt sich um die Längsmittelachse M. Der Zwischenkörper 75 ist so zwischen dem Grundkörper 72 und dem Öffnungskörper 78 angeordnet. Er erstreckt sich bevorzugt (im Wesentlichen) über die gesamte axiale Breite des Grundkörpers 72.

In dem Öffnungskörper 78 ist eine Vielzahl durchgängiger Öffnungen 79 ausgebildet, die jeweils eine Verbindung zwischen dem Zwischenkörper 75 und der Umgebung herstellen. Jede Öffnung 79 ist umfangsseitig räumlich begrenzt und erstreckt sich radial. Die Öffnungen 79 sind identisch ausgebildet. Sie sind vorzugsweise (im Wesentlichen) in dem gesamten Öffnungskörper 78 angeordnet. Sie sind über dessen Umfang und axiale Breite angeordnet. Jede Öffnung 79 hat eine radiale Tiefe T und im Querschnitt bzw. in der Draufsicht eine konstante Öffnungsfläche. Ferner weist jede Öffnung 79 ein entsprechendes Volumen V auf, das hier ein Leimaufnahme-Volumen bzw. Leimabgabe-Volumen ist. Der Zwischenkörper 75 erstreckt sich unter der Öffnungen 79 über diese hinweg.

An jedem Lagekörper 73 ist stirnseitig ein plattenartiges Abschlussteil 80 angeordnet, das für den jeweiligen Lagerzapfen 74 eine entsprechende zentrale Öffnung aufweist und stirnseitig den Grundkörper 72 abdeckt. Jedes Abschlussteil 80 legt den Zwischenkörper 75 und Öffnungskörper 78 gegenüber dem benachbarten Grundkörper 72 örtlich fest. Es begrenzt außerdem den Ringspalt 76 axial. Die Abschlussteile 80 erstrecken sich parallel zueinander.

In jedem Lagerkörper 73 ist zentral eine axial verlaufende Zuführung 81 angeordnet. Ferner sind in jedem Lagerkörper 73 mehrere Verteilkanäle 82 angeordnet, die mit der jeweiligen Zuführung 81 in Strömungsverbindung stehen und sich von dieser Zuführung 81 radial nach außen erstrecken. Die in jedem Lagerkörper 73 angeordneten Verteilkanäle 82 sind bevorzugt in einer Ebene und angular gleichmäßig beabstandet zueinander angeordnet.

In dem Grundkörper 72 sind mehrere Beaufschlagungskanäle 83 angeordnet, die sich radial erstrecken und den Grundkörper 72 vollständig durchdringen. Jeder Beaufschlagungskanal 83 stellt eine Strömungsverbindung zwischen einem Verteilkanal 82 und dem Ringspalt 76 her. Jeder Beaufschlagungskanal 83 hat einen radial inneren Einlass und einen radial äußeren Auslass.

Jede Zuführung 81 steht mit einer Beaufschlagungseinrichtung 84 in Strömungsverbindung, die zum Beispiel Bestandteil der ersten Vorrichtung 2 zum Herstellen einer einseitig kaschierten ersten Wellpappebahn ist. Beispielsweise ist eine entsprechende gemeinsame Beaufschlagungseinrichtung 84 vorhanden.

Im Einsatz befindet sich außenseitig auf dem Öffnungskörper 78, also auf dessen Arbeitsfläche, Leim aus dem ersten Leimbehälter 24, der auf die Spitzen der Wellung der endlosen ersten Materialbahn 16 bzw. Wellbahn aufgetragen wird. Die erste Leim-Dosiereinrichtung 22, die als Leim-Dosierwalze ausgeführt ist, liegt außen gegen den Öffnungskörper 78 an und dient zum Ausbilden einer gleichmäßigen Leimschicht auf dem Öffnungskörper 78. Die erste Leim-Auftragswalze 21 rotiert dabei um ihre Längsmittelachse M und erstreckt sich senkrecht zu der Förderrichtung der endlosen ersten Materialbahn 16 bzw. Wellbahn. Auch die erste Leim-Dosierwalze 22, die sich parallel zu der ersten Leim-Auftragswalze 21 erstreckt, rotiert entsprechend.

Wenn die Beaufschlagungseinrichtung 84 außer Betrieb ist oder nur mit geringer Leistung betrieben wird, bleibt der Zwischenkörper 75 unverformt. Er verschließt radial innen dicht die Öffnungen 79 und erstreckt sich nur außerhalb bzw. unterhalb derselben. Insbesondere greift er nicht in die Öffnungen 79 von radial innen ein. Leim ist so über das volle Flüssigkeitsaufnahme-Volumen V in der jeweiligen Öffnung 79 aufnehmbar und auch wieder entsprechend an die endlose erste Materialbahn 16 abgebbar.

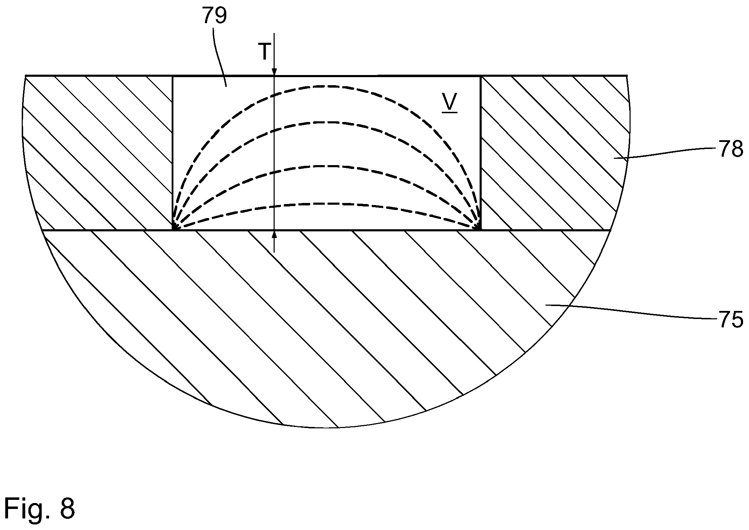

Wenn die Beaufschlagungseinrichtung 84 dagegen in Betrieb ist bzw. mit ausreichender Leistung betrieben wird, wird über ein Beaufschlagungsfluid über die Zuführungen 81, die Verteilkanäle 82, die Beaufschlagungskanäle 83 in dem Ringspalt 76 eine Druckkraft erzeugt, die auf den Zwischenkörper 75 von radial innen wirkt. Insbesondere erfährt der Zwischenkörper 75 eine gleichmäßige Druckbeaufschlagung von radial innen nach radial außen. Der Zwischenkörper 75 wird in Richtung auf den Öffnungskörper 78 nach radial außen bewegt bzw. gedrückt. In Abhängigkeit des Drucks des Beaufschlagungsfluids wird der Zwischenkörper 75 dabei von radial innen in die Öffnungen 79 gedrückt, wodurch deren Flüssigkeitsaufnahme-Volumen V von radial innen aus verkleinert wird. Der Zwischenkörper 75 ist im Bereich jeder Öffnung 79 nach radial außen, beispielsweise domartig, gewölbt. Er liegt dabei dicht an dem Öffnungskörper 78 an und bildet eine Leimbarriere. Unterschiedlich starke Beaufschlagungen und entsprechende Stellungen des Zwischenkörpers 75 sind in Figur 8 beispielhaft gestrichelt dargestellt.

Je weiter der Zwischenkörper 75 in die jeweilige Öffnung 79 von radial innen eingreift, desto weniger Leim ist dort aufnehmbar und auch entsprechend wieder abgebbar. Die Öffnungen 79 sind so nur noch imstande, teilweise Leim aufzunehmen und auch entsprechend wieder abzugeben. Eine Leimauftragsmenge bzw. Leimabgabemenge ist so dosierbar. Sie ist während einer Produktion ohne Stoppen derselben veränderbar.

Wenn die Beaufschlagung des Zwischenkörpers 75 wieder reduziert wird, wird so auch wieder dessen Eingriff in den Öffnungskörper 78 reduziert.

Alternativ oder zusätzlich ist die erste Leim-Dosiereinrichtung 22 wie die erste Leim-Auftragseinrichtung 21 ausgeführt und so über ihre Arbeitsfläche imstande, unterschiedliche Mengen von Leim aufzunehmen bzw. abzugeben.

Die zweite Vorrichtung 32 zum Herstellen einer einseitig kaschierten zweiten Wellpappebahn ist bevorzugt analog wie die erste Vorrichtung 2 zum Herstellen einer einseitig kaschierten ersten Wellpappebahn mit einer entsprechenden Leim-Auftragseinrichtung 21 und/oder Leim-Dosiereinrichtung 22 ausgestattet.

Jede Zuführung 81 steht mit einer Beaufschlagungseinrichtung 84 in Strömungsverbindung, die zum Beispiel Bestandteil der zweiten Vorrichtung 32 zum Herstellen einer einseitig kaschierten zweiten Wellpappebahn ist. Beispielsweise ist eine entsprechende gemeinsame Beaufschlagungseinrichtung 84 vorhanden.

Die erste Beleimungs-Auftragseinrichtung 63 und/oder die zweite Beleimungs-Auftragseinrichtung 67 sind bevorzugt wieder wie die erste Leim-Auftragseinrichtung 21 ausgebildet. Sie sind so imstande, wieder unterschiedliche Leimmengen aufzunehmen und wieder abzugeben. Jede Beleimungs-Auftragseinrichtung 63, 67 steht mit der jeweiligen einseitig kaschierten Wellpappebahn 20 bzw. 48 in direktem Kontakt und trägt von unten Leim auf deren Wellung bzw. Riffelung auf.

Alternativ oder zusätzlich sind die erste Leim-Abquetscheinrichtung 64 und/oder zweite Leim-Abquetscheinrichtung 68 wie die erste Leim-Auftragseinrichtung 21 ausgeführt und so imstande, Leim in unterschiedlichen Mengen aufzunehmen und wieder abzugeben. Sie liegen an der ersten bzw. zweiten Beleimungs-Auftragseinrichtung 63, 67 außen an.

Jede Zuführung 81 steht mit einer Beaufschlagungseinrichtung 84 in Strömungsverbindung, die zum Beispiel Bestandteil des Leimwerks 61 ist. Beispielsweise ist eine entsprechende gemeinsame Beaufschlagungseinrichtung 84 vorhanden.

Alternativ ist die endlose beidseitig kaschierte Wellpappebahn 1 beispielsweise dreilagig oder siebenlagig.

Es ist zweckmäßig, wenn bei der Druckvorrichtung mindestens eine Druckwalze bzw. Dosierwalze wie die erste Leim-Auftragseinrichtung 21 ausgeführt und so imstande ist, unterschiedliche Mengen an Druckfarbe aufzunehmen und abzugeben. Die Druckvorrichtung ist insbesondere als Siebdruckvorrichtung oder Flexodruckvorrichtung ausgebildet.

Die hier verwendeten Ausdrücke "stromabwärts", "stromaufwärts", "vorgeordnet", "nachgeordnet" oder dergleichen beziehen sich insbesondere auf die Förderung der Bahn/en.

## Patentansprüche

1. Flüssigkeitseinrichtung,
a) mit einem Grundkörper (72),
b) mit einem über dem Grundkörper (72) angeordneten Zwischenkörper (75), und
c) mit einem über dem Zwischenkörper (75) angeordneten, Öffnungen (79) aufweisenden Öffnungskörper (78),
**dadurch gekennzeichnet, dass**
d) der Zwischenkörper (75) und/oder der Öffnungskörper (78) derart beaufschlagbar und der Zwischenkörper (75) derart ausgebildet ist, dass der Zwischenkörper (75) imstande ist, ein Flüssigkeitsaufnahme-Volumen (V) von mindestens einer Öffnung (79), insbesondere von mindestens einer Vielzahl, der Öffnungen (79) durch mindestens teilweises Eingreifen in diese zu ändern.

2. Flüssigkeitseinrichtung nach Anspruch 1, **dadurch gekennzeichnet, dass** sie als Flüssigkeits-Dosiereinrichtung (22, 64, 68), Flüssigkeits-Abquetscheinrichtung (22, 64, 68), Flüssigkeits-Auftragseinrichtung (21, 63, 67), Flüssigkeits-Überführungseinrichtung (21, 63, 67), Leimeinrichtung (21, 22, 61, 62, 63, 64, 66, 67, 68), Vorbeschichtungseinrichtung und/oder Farbeneinrichtung ausgeführt ist.

3. Flüssigkeitseinrichtung nach Anspruch 1 oder 2, **dadurch gekennzeichnet, dass** die Öffnungen (79) jeweils durchgängig sind.

4. Flüssigkeitseinrichtung nach einem der vorherigen Ansprüche, **dadurch gekennzeichnet, dass** die Öffnungen (79) in einem Bereich des Öffnungskörpers (78) angeordnet sind, der zumindest 60 %, bevorzugt mindestens 80 %, des Öffnungskörpers (78) ausmacht.

5. Flüssigkeitseinrichtung nach einem der vorherigen Ansprüche, **dadurch gekennzeichnet, dass** der Öffnungskörper (78) als Gitterkörper oder Siebkörper ausgeführt ist.

6. Flüssigkeitseinrichtung nach einem der vorherigen Ansprüche, **dadurch gekennzeichnet, dass** die Öffnungen (79) in einer Draufsicht jeweils eckig sind.

7. Flüssigkeitseinrichtung nach einem der vorherigen Ansprüche, **dadurch gekennzeichnet, dass** der Zwischenkörper (75) und/oder Öffnungskörper (78) derart beaufschlagbar ist, dass der Zwischenkörper (75) imstande ist, das Flüssigkeitsaufnahme-Volumen (V) der mindestens einen Öffnung (79) um mindestens 5 %, bevorzugt mindestens 10 %, bevorzugt mindestens 20%, bevorzugt mindestens 30 %, bevorzugt mindestens 40 %, bevorzugt mindestens 50 %, bevorzugt mindestens 60 %, zu verkleinern.

8. Flüssigkeitseinrichtung nach einem der vorherigen Ansprüche, **dadurch gekennzeichnet, dass** der Zwischenkörper (75) und/oder Öffnungskörper (78) räumlich begrenzt beaufschlagbar ist, wobei vorzugsweise die räumliche Begrenzung veränderbar ist.

9. Flüssigkeitseinrichtung nach einem der vorherigen Ansprüche, **dadurch gekennzeichnet, dass** der Grundkörper (72) als Walze ausgeführt ist, wobei vorzugsweise der Zwischenkörper (75) im Querschnitt ringförmig und vorzugsweise der Öffnungskörper (78) im Querschnitt ringförmig ist.

10. Flüssigkeitseinrichtung nach Anspruch 9, **dadurch gekennzeichnet, dass** in dem Grundkörper (72) mindestens ein Beaufschlagungskanal (83) zum Beaufschlagen des Zwischenkörpers (75), insbesondere von innen, angeordnet ist.

11. Flüssigkeitseinrichtung nach einem der Ansprüche 1 bis 8, **dadurch gekennzeichnet, dass** der Grundkörper plattenförmig ist.

12. Flüssigkeitsvorrichtung,
a) mit mindestens einer Flüssigkeitseinrichtung nach einem der vorherigen Ansprüche, und
b) mit mindestens einer mit der mindestens einen Flüssigkeitseinrichtung zumindest zeitweise in Verbindung stehenden Beaufschlagungseinrichtung (84) zum Beaufschlagen des Zwischenkörpers (75) und/oder Öffnungskörpers (78).

13. Flüssigkeitsvorrichtung nach Anspruch 12, **dadurch gekennzeichnet, dass** die mindestens eine Beaufschlagungseinrichtung (84) hydraulischer, pneumatischer und/oder mechanischer Art ist.

14. System,
a) mit mindestens einer Flüssigkeitsvorrichtung nach Anspruch 12 oder 13, und
b) mit einer Wellpappeanlage, die umfasst
i. mindestens eine Vorrichtung (2, 32) zum Herstellen mindestens einer einseitig kaschierten Wellpappebahn,
ii. eine Vorrichtung (70) zum Herstellen einer zweiseitig kaschierten Wellpappebahn, die mindestens eine einseitig kaschierte Wellpappebahn (20, 48) aufweist, und
iii. ein zwischen der mindestens einen Vorrichtung (2, 32) zum Herstellen mindestens einer einseitig kaschierten Wellpappebahn und der Vorrichtung (70) zum Herstellen einer zweiseitig kaschierten Wellpappebahn angeordnetes Leimwerk (61) zum Auftragen von Leim auf die mindestens eine einseitig kaschierte Wellpappebahn (20, 48),
c) wobei die mindestens eine Flüssigkeitsvorrichtung Bestandteil der Wellpappeanlage oder dieser vorgeordnet ist.

15. System nach Anspruch 14, **dadurch gekennzeichnet, dass** die mindestens eine Flüssigkeitseinrichtung Bestandteil der mindestens einen Vorrichtung (2, 32) zum Herstellen mindestens einer einseitig kaschierten Wellpappebahn, des Leimwerks (61), einer Druckvorrichtung und/oder einer Vorbeschichtungsvorrichtung ist.

## Claims

1. Liquid device,
a) having a base body (72),
b) having an intermediate body (75) arranged above the base body (72), and
c) having an opening body (78) arranged above the intermediate body (75) and having openings (79),
**characterised in that**
d) the intermediate body (75) and/or the opening body (78) can be acted upon in such a way and the intermediate body (75) is designed in such a way that the intermediate body (75) is able to alter a liquid intake volume (V) of at least one opening (79), in particular of at least a plurality of openings (79) by at least partially engaging therewith.

2. Liquid device according to Claim 1, **characterised in that** it is designed as a liquid metering device (22, 64, 68), liquid squeezing device (22, 64, 68), liquid application device (21, 63, 67), liquid transfer device (21, 63, 67), adhesive application device (21, 22, 61, 62, 63, 64, 66, 67, 68), pre-coating device and/or colouring device.

3. Liquid device according to Claim 1 or 2, **characterised in that** the openings (79) are respectively through-holes.

4. Liquid device according to one of the preceding claims, **characterised in that** the openings (79) are arranged in a region of the opening body (78) that constitutes at least 60%, preferably at least 80%, of the opening body (78).

5. Liquid device according to one of the preceding claims, **characterised in that** the opening body (78) is designed as a lattice body or screen body.

6. Liquid device according to one of the preceding claims, **characterised in that** the openings (79) are respectively angular in a plan view.

7. Liquid device according to one of the preceding claims, **characterised in that** the intermediate body (75) and/or opening body (78) can be acted upon in such a way that the intermediate body (75) is able to reduce the liquid intake volume (V) of the at least one opening (79) by at least 5%, preferably at least 10%, preferably at least 20%, preferably at least 30%, preferably at least 40%, preferably at least 50%, preferably at least 60%.

8. Liquid device according to one of the preceding claims, **characterised in that** the intermediate body (75) and/or opening body (78) can be acted upon in a spatially limited manner, wherein the spatial limitation can preferably be altered.

9. Liquid device according to one of the preceding claims, **characterised in that** the base body (72) is designed as a roller, wherein the intermediate body (75) is preferably annular in cross-section and the opening body (78) is preferably annular in cross-section.

10. Liquid device according to Claim 9, **characterised in that** at least one actuation channel (83) is arranged in the base body (72) for acting upon the intermediate body (75), in particular from the inside.

11. Liquid device according to one of Claims 1 to 8, **characterised in that** the base body is plate-shaped.

12. Liquid apparatus,
a) having at least one liquid device according to one of the preceding claims, and
b) having at least one actuation device (84) connected to the at least one liquid device at least temporarily for acting upon the intermediate body (75) and/or opening body (78).

13. Liquid device according to Claim 12, **characterised in that** the at least one actuation device (84) is of the hydraulic, pneumatic and/or mechanical type.

14. System,
a) having at least one liquid device according to Claim 12 or 13, and
b) having a corrugated cardboard plant, which comprises
i. at least one device (2, 32) for producing at least one single-face corrugated cardboard web,
ii. a device (70) for producing a double-faced corrugated cardboard web, which has at least one single-face corrugated cardboard web (20, 48), and
iii. a gluing unit (61) arranged between the at least one device (2, 32) for producing at least one single-face corrugated cardboard web and the device (70) for producing a double-faced corrugated cardboard web for applying adhesive to the at least one single-face corrugated cardboard web (20, 48),
c) wherein the at least one liquid device is part of the corrugated cardboard plant or arranged upstream thereof.

15. System according to Claim 14, **characterised in that** the at least one liquid device is part of the at least one device (2, 32) for producing at least one single-face corrugated cardboard web, the gluing unit (61), a printing device and/or a pre-coating device.

## Revendications

1. Dispositif à liquide :
a) comportant un corps de base (72),
b) comportant un corps intermédiaire (75) agencé au-dessus du corps de base (72), et
c) comportant un corps d'ouverture (78) agencé au-dessus du corps intermédiaire (75) et présentant des ouvertures (79),
**caractérisé en ce que**
d) le corps intermédiaire (75) et/ou le corps d'ouverture (78) peut être sollicité et le corps intermédiaire (75) est conçu de telle sorte que le corps intermédiaire (75) est capable de faire varier un volume de réception de liquide (V) d'au moins une ouverture (79), en particulier d'au moins une pluralité des ouvertures (79), en s'engageant au moins partiellement dans celles-ci.

2. Dispositif à liquide selon la revendication 1, **caractérisé en ce qu'**il est configuré sous la forme d'un dispositif de dosage de liquide (22, 64, 68), d'un dispositif d'exprimage de liquide (22, 64, 68), d'un dispositif d'application de liquide (21, 63, 67), d'un dispositif de transfert de liquide (21, 63, 67), d'un dispositif d'encollage (21, 22, 61, 62, 63, 64, 66, 67, 68), d'un dispositif de pré-enduction et/ou d'un dispositif d'encrage.

3. Dispositif à liquide selon la revendication 1 ou 2, **caractérisé en ce que** les ouvertures (79) sont respectivement traversantes.

4. Dispositif à liquide selon l'une des revendications précédentes, **caractérisé en ce que** les ouvertures (79) sont agencées dans une zone du corps d'ouverture (78) qui représente au moins 60 %, de préférence au moins 80 %, du corps d'ouverture (78).

5. Dispositif à liquide selon l'une des revendications précédentes, **caractérisé en ce que** le corps d'ouverture (78) est configuré sous la forme d'un corps de grille ou d'un corps de tamis.

6. Dispositif à liquide selon l'une des revendications précédentes, **caractérisé en ce que** les ouvertures (79) sont respectivement carrées en vue de dessus.

7. Dispositif à liquide selon l'une des revendications précédentes, **caractérisé en ce que** le corps intermédiaire (75) et/ou le corps d'ouverture (78) peut être sollicité de telle sorte que le corps intermédiaire (75) est capable de réduire le volume de réception de liquide (V) de ladite au moins une ouverture (79) d'au moins 5 %, de préférence d'au moins 10 %, de préférence d'au moins 20 %, de préférence d'au moins 30 %, de préférence d'au moins 40 %, de préférence d'au moins 50 %, de préférence d'au moins 60 %.

8. Dispositif à liquide selon l'une des revendications précédentes, **caractérisé en ce que** le corps intermédiaire (75) et/ou le corps d'ouverture (78) peut être sollicité de manière spatialement limitée, dans lequel la limite spatiale est de préférence modificable.

9. Dispositif à liquide selon l'une des revendications précédentes, **caractérisé en ce que** le corps de base (72) est configuré sous la forme d'un cylindre, dans lequel le corps intermédiaire (75) est de préférence annulaire en coupe transversale et le corps d'ouverture (78) est de préférence annulaire en coupe transversale.

10. Dispositif à liquide selon la revendication 9, **caractérisé en ce qu'**au moins un canal de sollicitation (83) est agencé dans le corps de base (72) pour solliciter le corps intermédiaire (75), en particulier depuis l'intérieur.

11. Dispositif à liquide selon l'une des revendications 1 à 8, **caractérisé en ce que** le corps de base est en forme de plaque.

12. Appareil à liquide,
a) comportant au moins un dispositif à liquide selon l'une des revendications précédentes, et
b) comportant au moins un dispositif de sollicitation (84) au moins temporairement relié audit au moins un dispositif à liquide, pour solliciter le corps intermédiaire (75) et/ou le corps d'ouverture (78).

13. Appareil à liquide selon la revendication 12, **caractérisé en ce que** ledit au moins un dispositif de chargement (84) est de type hydraulique, pneumatique et/ou mécanique.

14. Système,
a) comportant au moins un appareil à liquide selon la revendication 12 ou 13, et
b) comportant une installation de fabrication de carton ondulé qui comprend :
i. au moins un dispositif (2, 32) destiné à fabriquer au moins une bande de carton ondulé laminée d'un seul côté,
ii. un appareil (70) destiné à fabriquer une bande de carton ondulé laminée des deux côtés qui présente au moins une bande de carton ondulé (20, 48) laminée d'un seul côté, et
iii. un dispositif d'encollage (61) agencé entre ledit au moins un appareil (2, 32) destiné à fabriquer au moins une bande de carton ondulé laminée d'un seul côté et l'appareil (70) destiné à fabriquer une bande de carton ondulé laminée des deux côtés (61), afin d'appliquer de la colle sur ladite au moins une bande de carton ondulé laminée d'un seul côté (20, 48),
c) dans lequel ledit au moins un appareil à liquide fait partie de l'installation de fabrication de carton ondulé ou est agencé en aval de celle-ci.

15. Système selon la revendication 14, **caractérisé en ce que** ledit au moins un dispositif à liquide fait partie dudit au moins un dispositif à liquide (2, 32) destiné à fabriquer au moins une bande de carton ondulé laminée d'un seul côté, du dispositif d'encollage (61), d'un dispositif d'impression et/ou d'un dispositif de pré-enduction.
